# EUROPEAN PATENT SPECIFICATION

(11) **EP 3 212 530 B1**
(45) Date of publication and mention of the grant of the patent: **17.02.2021**
(21) Application number: 15855438.6
(22) Date of filing: 28.10.2015
(51) Int. Cl.: B65D 33/00, B32B 27/32, B65D 33/18, B65D 33/22, B65D 43/08, B65D 51/00

(54) **ANTIBLOCK COATING FOR ADHESIVE IN BAG MANUFACTURE**
ANTIBLOCKIERBESCHICHTUNG FÜR KLEBSTOFF BEI DER BEUTELHERSTELLUNG
REVÊTEMENT ANTI-ADHÉRENT POUR ADHÉSIF DANS LE DOMAINE DE LA FABRICATION DE SACS

(30) Priority: 30.10.2014 US 201462072528 P
(43) Date of publication of application: 06.09.2017
(73) Proprietor: Coating Excellence International, LLC, Wrightstown, WI 54180 (US)
(72) Inventor: LENNON, Patrick, G., De Pere, WI 54115 (US)
(74) Representative: Strehl Schübel-Hopf & Partner
(86) International application number: PCT/US2015/057871
(87) International publication number: WO 2016/069778

(56) References cited:
- US-A- 4 124 875
- US-A- 4 512 479
- US-A- 4 888 223
- US-A1- 2003 096 126
- US-A1- 2005 100 252
- US-A1- 2007 292 053
- US-A1- 2010 154 362
- US-A1- 2010 192 520
- US-A1- 2013 034 317

## Description

### FIELD OF THE INVENTION

The present invention relates generally to a method of manufacturing a polymeric woven bag.

### BACKGROUND OF THE INVENTION

U.S. Pat. No. 3,380,646 discloses a container of thermally weldable, plastic material and a method of producing the container by welding together multiple strips or sheets of plastic material to form a container having a welded closed, bottom part of the container. An open top of the container is collapsed and flattened to provide a pinch closed top.

U.S. Pat. No. 5,048,692 discloses a bag folded one or more times to form a primary closure. A flap seal extends across the folded configuration. A string underneath the flap seal is used to tear open the flap seal and permit the bag to unfold. A zipper closure provides a secondary enclosure.

US 2007/0292053 A1 discloses a bag of paper material and a paper tape coated with a hot melt adhesive, wherein the tape is folded to adhere the hot melt adhesive against a front panel of the paper bag to provide a glued paper-to-paper section. The tape substitutes for a stepped end of a multi-wall paper bag. The stepped end provides a sealing flap coated with hot melt adhesive, wherein the sealing flap can be folded over and sealed to the front panel of the paper bag.

A hot melt adhesive or heat activated adhesive is applied to the lip and partial face of polywoven pinch bags used for bulk packaging of pet food, agricultural feeds, wild bird seed, etc. Examples of the heat activated adhesives and polywoven pinch bags are described in U.S. Pat. Nos. 8,240,915, 8,297,840, and 8,475,046, incorporated herein by reference. The hot melt adhesive used on polywoven bags requires a lower softening or re-activation temperature than adhesives used on multiwall paper bags due to distortion of the polywoven material at temperatures of about 148,9 °C (300°F).

The lower softening point or re-activation temperature of these hot melt adhesives typically results in a softer, more tacky adhesive. During the manufacturing and packaging process of the bags and also during the de-stacking and filling of the bags, the bags tend to stick together due to the tackiness of the adhesive.

US 4 888 223 A discloses starch or corn starch as a blocking inhibitor which is distributed on an innermost, food-contacting polyolefin resin layer of a food packaging material.

US 4 512 479 A discloses a bag comprising a seal wherein a portion of the seal has a reduced adhesive strength to facilitate opening of the bag.

US 2013/034317 A1 discloses a polymeric woven bag having a first panel and a second panel and an open end of the bag to be pinched closed. A first layer of heat activated adhesive material is on a portion of the bag to form an adhesive-to-adhesive seal by contact with a second layer of heat activated adhesive material on a portion of the bag.

US 2003/096126 A1 discloses the surface-coating of hydrophobic polymers (e.g., polyethylene) with thin films of starch in order to render the surfaces hydrophilic, using hot, aqueous solutions of starch for coating.

US 4 124 875 A discloses a dry dusting applicator for laying down a powder profile of starch, wax, or the like onto a substrate.

US 2010/154362 A1 discloses a method and apparatus for sealing a bag made of a polymeric material by applying heat activated layers on different portions of the bag, wherein the first adhesive layer and the second adhesive layer have respective heat activation temperatures below the softening point temperature of the polymeric material.

US 2005/100252 A1 discloses a multi-wall flexible container that includes an outer wall of a laminate of first and second sheets, and one or more heat sealed or heat sealable joints.

### SUMMARY OF THE INVENTION

The present invention is defined in the claims.

A bag of polymeric material has a first panel and a second panel forming a pinch closed bag end therebetween, a first layer of heat activated adhesive material on a portion of the first panel having a heat activated first adhesive layer to form an adhesive-to adhesive seal with a heat activated second adhesive layer on a portion of the second panel, the first adhesive layer and the second adhesive layer having respective melt temperatures below the softening point temperature of the polymeric material.

An embodiment of a bag is foldable on itself to form a folded first panel and to form an adhesive-to-adhesive seal of the first adhesive layer on the folded first panel.

An embodiment of a bag has the second adhesive layer on the foldable sealing flap portion.

An embodiment of a bag has a second panel longer than a first panel wherein the second layer of heat activated adhesive material is on a portion of the second panel that is longer than the first panel.

A method of making a bag includes forming a pinch closed bag end between a first panel and a second panel, applying a heat activated first adhesive layer on a portion of the first panel, applying a heat activated second adhesive layer on a portion of the second panel, wherein heat activation temperatures of the first adhesive layer and the second adhesive layer are below the softening point temperature of the polymeric material, and after filling the bag with contents activating the first adhesive layer and the second adhesive layer by applying heat at a temperature below the softening point temperature of the polymeric material, and pinch closing the end of the bag to urge the adhesive layers into contact and to form an adhesive-to-adhesive seal.

An embodiment of the method includes folding the bag to fold the first panel on itself to urge the second adhesive layer into contact with the first adhesive layer on the first panel of the bag and form an adhesive-to-adhesive seal.

Another embodiment of the method includes folding a flap portion of the second panel over the first panel to urge the second adhesive layer into contact with the first adhesive layer on the first panel of the bag and form an adhesive-to-adhesive seal.

The present invention includes the addition of an antiblock agent which is a food grade starch polymer, over the top of a hot melt adhesive applied to a substrate material, such as woven polypropylene structures, polylaminates, etc.

The term "antiblock" agent shall be understood herein to mean any materia! which is effective to prevent or discourage any significant degree of cling between the surface of the film to which it is applied and a like film surface and to confer a slide property on said surface relative to a like film surface.

A principal object of the invention is to minimize the tackiness of an adhesive, such as a hot melt adhesive, while still allowing reactivation of the hot melt adhesive to form an adhesive to adhesive bond of a bag closure system once a pinch end of a bag is folded and sealed onto itself.

Still another object of the invention is to reduce the sticking together of bags that have adhesives applied to them.

Still another object of the invention is to eliminate double bag feeds during the process of filling bags that have adhesives applied to them.

These and other objects will be apparent to those skilled in the art.

### DETAILED DESCRIPTION OF THE INVENTION

Bags to be used for bulk packaging of granular or finely ground materials, such as nutrients including, but not limited to, whole and ground grains, seeds, dry pet food, chemical fertilizers, other bulk food and non-food products, and growing plant treatments must be durable to resist material degradation, abrasion, puncture, contamination and leakage of contents, and must withstand a drop test while sealed and filled with contents weighing up to about 22,7kg (50 pounds), and even up to about 36,3kg (80 pounds). Moreover, such bags are typically disposed of after use, which requires an inexpensive and light-weight construction that is environmentally friendly, may be recyclable, and reduces waste in the supply chain from production, use of the bag, to disposal in either a recycling stream or landfill. Currently, multi-walled paper and polymer layer bags, consisting of multiple paper layers and layers of polymer film, are heavy, expensive to produce and ship, easy to tear and puncture, and create waste in the supply chain. Multi-wall paper/polymer layer bags, traditionally used to package bulk products, are not recyclable and add significant amounts of materials to landfills. The bags produced according to the present invention overcome many of the significant drawbacks of multi-wall paper/polymer layer bags, by offering an enhanced lighter weight bag that is less expensive, more durable and tear-resistant, resulting in significantly reduced waste in the supply chain, and is 100% recyclable in a suitable recycling stream. Moreover, bags produced according to the present invention can function essentially in the same way on existing bag filling and sealing equipment to perfect a pinch-sealed bag filled with product.

A typical manufacturing production line provides apparatus to fill the bags with contents, and further provides apparatus to close the bag in a simple manner by pinch closing, and further provides equipment to seal the pinch closed bag. Bags of traditional construction can be close by sewing or alternatively, sealed with a hot melt sealant instead of sewing. Such bags of traditional construction include multi-wall bags fabricated of paper and polymeric film laminates. The bag construction must allow quick filling of the bag with contents and thereafter must allow closing and sealing the bag.

The traditional bag construction has layers of polymer laminated with a paper layer or layers. Sealing of the traditional bags after filling is accomplished by re-melting a hot melt adhesive and/or meltable polymer layer at an elevated temperature while the paper resists damage to the bag construction. The high flash point inherent to paper is relied upon to withstand the application of heat at an elevated temperature and thereby to protect the bag from damage due to the heat and temperature. Further, a thin polyethylene, PE, polymer coating on the paper surface can melt or soften together with the hot melt adhesive to adhere to the paper and form a secure seal. Existing end-user production line equipment applies hot air onto the bag to melt and activate the hot melt adhesive and/or meltable polymer layer, following the bag filling operation. The heat must be applied at a temperature that melts the hot melt adhesive, and further, to at least partially melt the polymer coating on the paper surface, while relying on the paper to withstand the heat and temperature, and to prevent bag weakening or burning due the heat and temperature. However, a major drawback of the multi-wall paper and polymer laminates is that they are composite materials not capable of recycling as either paper or plastic as a single material classification. Further, the multi-wall laminates of the traditional bag are not compostable, and consequently remain in one piece in landfills. Further, the multi-wall laminates are heavy, and add unnecessary shipping costs.

In an end-user's manufacturing production line, an apparatus is provided to fill the bags with contents through an open end of the bag, followed by closing and sealing the filled bag. Traditional production lines have employed stitching equipment to sew the bags shut. Alternative production lines have heated air jets to apply heat at an elevated temperature to melt and activate pre-applied hot melt adhesives that have been pre-applied to traditional bags of thick multiwall paper and polymer film laminate construction. Thereafter, a closure mechanism closes the bags in an advantageous manner simply by pinch closing the open ends. The closure mechanism applies pressure on the bags to close and hold the bags closed while the hot melt adhesive adheres to the closed bag and until the adhesive cools and hardens.

The heat must be applied at a temperature that melts the hot melt adhesive, and further, which can melt portions of the polymer coating on the paper surface, while relying on the paper to withstand the heat and temperature, and prevent weakening or burning due the heat and temperature. The traditional bags have a construction of thick multi-wall paper and polymer film laminates. The one or more, thick paper layers of the traditional bags withstand the heat applied at elevated temperatures without weakening the bag strength and without burning the paper. Further, a laminated film coating of polyethylene, PE, on the paper surface partially melts while in contact with the melted, hot melt adhesive to form a heat seal with the adhesive.

The embodiments of the bags produced according to the present invention provide a sustainable solution to the long existing need for bags that replace traditional bags of multi-wall paper and polymer laminates, and yet can withstand the application of heat and temperature to seal the bags, which continue to be prevalent in existing production equipment.

There has been a long existing need for a bag fabricated of structural components capable of being recycled or resulting in less landfill material compared to traditional bags, and capable of being sealed by existing production equipment to avoid expensive replacement of existing production line equipment. Accordingly, to replace the existing structural components of a laminated paper and polymer bag with an improved bag, the improved bag must be heat sealed by existing production equipment while withstanding the application of heat and/or pressure to melt the adhesive and seal the bag. Moreover, there has been a long existing need to eliminate a paper and polymer laminate as one of the structural components of the bag, which is incapable of recycling and/or degradation in a land fill, and which add significantly higher weight and quantities of materials in a landfill.

Traditional multi-wall paper and polymer laminate bags each have about 275 grams of paper and 50 grams of polypropylene polymer, and a carbon footprint of about 11 as a measure of carbon emissions. Lighter weight bags of about 150 grams results from embodiments of the invention with fewer raw materials than those used in making the traditional bags, and result in a substantially reduced carbon footprint of about 5.

According to embodiments of the bags produced according to the present invention, woven bags are fabricated entirely of a recyclable polypropylene, and with structural components including a tubular woven (mesh) bag laminated inside of a non-porous polymeric film of a single layer or of laminated layers. The bags are fabricated entirely of a recyclable polypropylene material that is recyclable and may be compostable due to having resin additives such as metallocene, and further that is free of recycled or contaminated polymers of unknown chemistry and unknown material mixtures. Moreover, the bags produced according to embodiments of the invention are less heavy and are more resistant to abrasion, tearing and puncture, and are reusable compared with traditional multi-wall paper and polymer laminates that are susceptible to abrasion and damage. The bags produced according to embodiments of the invention reduce waste due to shipping costs, damaged bag contents and increased shelf life of the contents.

The bags produced according to the present invention fulfill a long existing need for lighter weight, strong bags having structural components that eliminate traditional non-recyclable paper-polymer laminates, and moreover, that are durable for reuse, and are degradable by composting in a landfill and are recyclable as a single material. Moreover, the recyclable and/or compostable bags include water soluble adhesive materials as structural components of the bags. Embodiments of the adhesive materials can be pre-applied while soluble in water, a nontoxic solvent. The adhesive materials are applied onto opposed surfaces of the bags, followed by curing by exposure to radiant or entrained heat, electron beam, EB, radiation, air or other curing medium and/or to evaporate the nontoxic dispersion for environmentally safe removal from the activatable adhesive components of the dispersion mixture that attain a non-adhesive hardened state, which is non-reactive to water or humidity, and is nontoxic by incidental contact with nutrients being filled in the bags. An opposite end of each of the bags has a pinch bottom or alternatively, a flat bottom configuration that is closed and sealed by sewing, or by an adhesive preferably a nontoxic adhesive or by plastic welding or by a material including, but not limited to polymeric, paper or nonwoven tape. The bags are folded flat for shipment to another manufacturing facility where the bags are filled with contents and closed and sealed.

The adhesive materials to seal the bag are activatable to a melted adhesive state using existing production line equipment that apply heat at a temperature sufficiently below the softening point temperature of the polymeric structural components of the bag, and to melt the adhesive materials to an adhesive state without damaging the other structural components of the bag.

While a traditional multi-wall paper/polymer layer bag can be sealed with a remelted hot melt adhesive, these hot melt adhesives are not suitable for sealing polymeric bags, which typically are comprised of one or more polymeric layers of recyclable polypropylene, or a recyclable and/or compostable polypropylene woven bag and an outer polymeric layer or laminate of two or more polymeric layers of recyclable polypropylene or other polymer material, but not including either paper or an outer layer, which is not heat-sealable on traditional bag manufacturing production equipment. The heat required to activate a hot melt adhesive to an adhesive state would be detrimental to a polymer woven bag and would destroy the structural integrity of the bag. A traditional multi-wall paper/polymer layer bag can be sealed with a hot melt adhesive, whereas on a polymeric bag the heat applied by existing end-user equipment to reactivate or re-melt a hot melt adhesive would further heat the polymer material of the bag above its softening point temperature causing the polymer material to soften, lose tensile strength or even undergo plastic deformation. Accordingly, typical known hot melt adhesives are not suitable for forming a seal on a polymeric bag.

The advantages of the present invention, as noted above, are that it reduces the tacky surface of a hot melt adhesive, reduces sticking together of bags that have adhesives applied to them, and eliminates double bag feeds during the process of filling the bags, while still allowing reactivation of the hot melt adhesive to form an adhesive to adhesive bond of the bag closure system once a pinch end of the bag is folded and sealed on itself.

The present invention includes the addition of an antiblock agent applied over the top of a hot melt or other adhesive applied to a substrate material, such as woven polypropylene structures, polylaminates, etc., for the purpose of eliminating the tackiness of the adhesive.

A hydrophobic, food grade starch powder typically used in the printing industry to keep printed sheets from blocking is commercially available as OXY DRY® anti-offset powder. This powder repels water, thus providing a non-blocking layer between various substrate layers.

The material as currently used is Oxy Dry powder. It can be purchased from Baldwin Americas. Product name: Oxy-Dry Anti-Offset Powder, Type Oxy-34C; Chemical Family: Carbohydrate; CAS Number: 9005-25-8. The material can be applied with dry dusting systems similar to the OXY-Dry Electronic Dry Dusting Systems from Oxy-Dry Corporation.

Another method of application may include a printing method, similar to the flexographic, offset, or other printing methods typically used for the application of inks.

As noted above, during the manufacturing and packaging process of the bags and also during their de-stacking and filling, the bags tend to stick together due to the tackiness of the adhesive. The addition of an antiblock agent over the adhesive minimizes the tackiness and the sticking together of the bags, minimizing double bag feeds during the filling process.

As will be described below, the present invention will be compared to the addition of zinc stearate antiblock agent. Zinc stearate, with the chemical formula of C₃₆-H₇₀-O₄-Zn, is a zinc soap that is widely used industrially. The term "soap" is used in its formal sense, as a metal salt of a fatty acid. It is a white solid that repels water. It is insoluble in polar solvents, such as alcohol and ether, but soluble in aromatic hydrocarbons, such as benzene and chlorinated hydrocarbons, when heated. It contains no electrolyte and has a hydrophobic effect. Its main application areas are the plastics and rubber industry where it is used as a releasing agent and lubricant which can be easily incorporated.

In accordance with the present invention, food grade starch powder can be applied with dry dusting systems similar to the Electrostatic Dry Dusting Systems from Oxy-Dry International, Inc., described in U.S. Pat. No. 4,124,875.

In the testing of the present invention, an aging study with a focus on comparing zinc stearate and Oxy Dry antiblocking materials was carried out. The set of specimens used for the study were unprinted, double-laminated bags, with one pinch-prepared end. The pinch-prepared end had a current pinch adhesive applied, along with either zinc stearate or Oxy Dry materials. A set of bags were aged at room temperature and another at 60 °C (140°F) and 70% relative humidity. Periodically, samples were removed from conditioning, sealed, and tested on an Instron testing machine to determine the peel strength of the pinch adhesive.

Additionally, a set of bags treated with the Oxy Dry product was pulled from the machine. Samples were conditioned at 60 °C (140°F) and 70% relative humidity and at -28,9°C (-20°F), and tested to determine peel strength. All test data was measured as an integral average value.

The results of the testing indicated that the peel strength of the pinch adhesive with the addition of Oxy Dry powder was similar in value to the addition of zinc stearate. A Minitab analysis of the test data was completed and showed that there was no statistical difference between the antiblock materials in terms of peel strength. Nonetheless, the food grade starch powder used in the method of the present invention was found to be effective in significantly reducing the tackiness of the adhesive applied to a polymeric woven bag during manufacture.

## Claims

1. A method of manufacturing a polymeric woven bag, comprising: a polymeric outer layer; an inner polymeric woven bag layer laminated to or adhesively adhered to the outer layer; a first panel and a second panel and an open end of the bag to be pinched closed between the first panel and the second panel after filling the bag with contents; a heat activated first adhesive layer on a portion of the first panel to form an adhesive-to adhesive seal by contact with a heat activated second adhesive layer on a portion of the second panel, wherein the first adhesive layer and the second adhesive layer have respective heat activation temperatures below the softening point temperature of the polymeric material, and wherein the first adhesive layer and the second adhesive layer are dried and impervious to water and are separate from each other to open the bag end for filling with contents, and wherein after filling the bag with contents the first adhesive layer and the second adhesive layer are activatable to adhesive states to form the adhesive-to-adhesive seal by an application of heat at a temperature below the softening point temperature of the polymeric material; comprising a step of reducing the tackiness of the adhesive applied to the polymeric woven bag during manufacture by applying an antiblock agent over the adhesive applied to the polymeric woven bag, **characterized in that** said antiblock agent is a food grade starch powder and said adhesive is a hot melt adhesive.

2. The method as recited in claim 1, wherein the polymeric woven bag is a woven polypropylene or polylaminate structure.

3. The method as recited in claim 1, wherein the food grade starch powder repels water.

4. The method as recited in claim 3, wherein the food grade starch powder provides a non-blocking layer between outer and inner layers.

5. The method as recited in claim 1, wherein the food grade starch powder is hydrophobic.

6. The method as recited in claim 2, wherein the woven polypropylene or polylaminate structure is a polywoven pinch bag.

7. The method as recited in claim 1, wherein the food grade starch powder is applied with dry dusting systems.

8. The method as recited in claim 1, wherein the heat activated adhesive layers extend across an area of width ranging from 1.27 cm (1/2 inch) to 15.24 cm (6 inches).

9. The method as recited in claim 1, wherein the adhesive layer and the further adhesive layer are on opposite panels of the bag.

10. The method as recited in claim 1, wherein the food grade starch powder is applied with a powder printing process

## Patentansprüche

1. Verfahren zur Herstellung eines Polymergewebebeutels, umfassend: eine polymere äußere Schicht; eine innere, Polymergewebebeutelschicht, die auf die äußere Schicht laminiert oder an die äußere Schicht haftend verklebt ist; eine erste Bahn und eine zweite Bahn und ein offenes Ende des Beutels, das nach dem Füllen des Beutels mit Inhalt zwischen der ersten Bahn und der zweiten Bahn geklemmt und verschlossen wird; eine wärmeaktivierte erste Klebstoffschicht auf einem Teil der ersten Bahn, um durch Kontakt mit einer wärmeaktivierten zweiten Klebstoffschicht auf einem Teil der zweiten Bahn eine Klebstoff-Klebstoff-Versiegelung zu bilden, wobei die erste Klebstoffschicht und die zweite Klebstoffschicht jeweils Wärmeaktivierungstemperaturen unterhalb der Erweichungspunkttemperatur des polymeren Materials aufweisen, und wobei die erste Klebstoffschicht und die zweite Klebstoffschicht getrocknet und wasserundurchlässig sind und zum Öffnen für das Befüllen mit Inhalt voneinander getrennt sind, und wobei nach dem Befüllen des Beutels mit Inhalt die erste Klebstoffschicht und die zweite Klebstoffschicht durch Anwendung von Wärme bei einer Temperatur unterhalb der Erweichungspunkttemperatur des polymeren Materials in klebende Zustände aktivierbar sind, um die Klebstoff-Klebstoff-Versiegelung zu bilden;
umfassend einen Schritt des Verringerns der Klebrigkeit des während der Herstellung auf den Polymergewebebeutel aufgetragenen Klebstoffs durch Auftragen eines Antiblockmittels auf den auf den Polymergewebebeutel aufgetragenen Klebstoff, **dadurch gekennzeichnet, dass** das Antiblockmittel ein Stärkepulver von Lebensmittelqualität ist und der Klebstoff ein Schmelzklebstoff/Hotmeltklebstoff ist.

2. Verfahren nach Anspruch 1, wobei der Polymergewebebeutel eine gewebte Polypropylen- oder Polylaminat-Struktur ist.

3. Verfahren nach Anspruch 1, wobei das Stärkepulver von Lebensmittelqualität Wasser abstößt.

4. Verfahren nach Anspruch 3, bei dem das Stärkepulver von Lebensmittelqualität eine nichtblockierende Schicht zwischen äußeren und inneren Schichten vorsieht.

5. Verfahren nach Anspruch 1, wobei das Stärkepulver von Lebensmittelqualität hydrophob ist.

6. Verfahren nach Anspruch 2, wobei die gewebte Polypropylen- oder Polylaminatstruktur ein Polymergewebe-Quetschbeutel ist.

7. Verfahren nach Anspruch 1, wobei das Stärkepulver von Lebensmittelqualität mit Trockenbestäubungssystemen aufgebracht wird.

8. Verfahren nach Anspruch 1, wobei sich die wärmeaktivierten Klebstoffschichten über eine Fläche mit einer Breite von 1,27 cm (1/2 Zoll) bis 15,24 cm (6 Zoll) erstrecken.

9. Verfahren nach Anspruch 1, wobei sich die Klebstoffschicht und die weitere Klebstoffschicht auf gegenüberliegenden Bahnen des Beutels befinden.

10. Verfahren nach Anspruch 1, bei dem das Stärkepulver von Lebensmittelqualität mit einem Pulverdruckverfahren aufgebracht wird.

## Revendications

1. Procédé de fabrication d'un sac polymère tissé, comprenant une couche polymère extérieure; une couche de sac polymère tissée intérieure qui est stratifiée sur ou collée de façon adhésive à la couche extérieure; un premier panneau et un second panneau et une extrémité ouverte du sac à fermer par pinçage entre le premier panneau et le second panneau après le remplissage du sac avec un contenu; une première couche adhésive activée à la chaleur sur une partie du premier panneau pour former un joint adhésif sur adhésif suite à un contact avec une seconde couche adhésive activée à la chaleur sur une partie du second panneau, dans lequel la première couche adhésive et la seconde couche adhésive présentent des températures d'activation à la chaleur respectives inférieures à la température du point de ramollissement du matériau polymère, et dans lequel la première couche adhésive et la seconde couche adhésive sont séchées et imperméables à l'eau et sont séparées l'une de l'autre pour ouvrir l'extrémité du sac dans le but de remplir celui-ci avec un contenu, et dans lequel, après le remplissage du sac avec un contenu, la première couche adhésive et la seconde couche adhésive sont activables pour être placées dans des états adhésifs de manière à former le joint adhésif sur adhésif par l'intermédiaire d'une application de chaleur à une température inférieure à la température du point de ramollissement du matériau polymère; le procédé comprenant une étape de réduction du pouvoir adhésif de l'adhésif qui est appliqué au sac polymère tissé pendant la fabrication en appliquant un agent anti-adhérent au-dessus de l'adhésif qui est appliqué au sac polymère tissé, **caractérisé en ce que** ledit agent anti-adhérent est une poudre d'amidon de qualité alimentaire et ledit adhésif est un adhésif thermofusible.

2. Procédé selon la revendication 1, dans lequel le sac polymère tissé est une structure tissée de polypropylène ou de polystratifié.

3. Procédé selon la revendication 1, dans lequel la poudre d'amidon de qualité alimentaire qui repousse l'eau.

4. Procédé selon la revendication 3, dans lequel la poudre d'amidon de qualité alimentaire constitue une couche non bloquante entre les couches extérieure et intérieure.

5. Procédé selon la revendication 1, dans lequel la poudre d'amidon de qualité alimentaire est hydrophobe.

6. Procédé selon la revendication 2, dans lequel la structure tissée de polypropylène ou de polystratifié est un sac à pincer en polytissé.

7. Procédé selon la revendication 1, dans lequel la poudre d'amidon de qualité alimentaire est appliquée en utilisant des systèmes de poudrage à sec.

8. Procédé selon la revendication 1, dans lequel les couches adhésives activées à la chaleur s'étendent en travers d'une région dont la largeur est comprise dans la gamme de 1,27 cm (1/2 pouce) à 15,24 cm (6 pouces).

9. Procédé selon la revendication 1, dans lequel la couche adhésive et la couche adhésive supplémentaire sont situées sur des panneaux opposés du sac.

10. Procédé selon la revendication 1, dans lequel la poudre d'amidon de qualité alimentaire est appliquée en exécutant un procédé d'impression par poudre.
